Europäisches Patentamt

European Patent Office

Office européen des brevets

(11) Veröffentlichungsnummer: **0 108 393**
**A1**

## (12) EUROPÄISCHE PATENTANMELDUNG

(21) Anmeldenummer: 83110942.6

(22) Anmeldetag: 03.11.83

(51) Int. Cl.³: **F 16 D 47/06**

(30) Priorität: 09.11.82 DE 3241274

(43) Veröffentlichungstag der Anmeldung:
16.05.84 Patentblatt 84/20

(84) Benannte Vertragsstaaten:
DE FR GB IT SE

(71) Anmelder: Adam Opel Aktiengesellschaft
Bahnhofsplatz 1 Postfach 1560
D-6090 Rüsselsheim(DE)

(72) Erfinder: Oehl, Adolf, Ing. grad.
Am Eulenrech 19
D-6501 Budenheim(DE)

(72) Erfinder: Fleischmann, Otwin, Ing. grad.
Jahnstrasse 19
D-6501 Nieder-Olm(DE)

(74) Vertreter: Baumgarten, Jochem, Dipl.-Ing. et al,
C/O Adam Opel Aktiengesellschaft Bahnhofsplatz 1
Postfach 1560
D-6090 Rüsselsheim(DE)

(54) Fahrzeugkupplung, insbesondere für Kraftfahrzeuge.

(57) Zur Dämpfung von Drehschwingungen im Antriebsstrang von Kraftfahrzeugen wird vorgeschlagen, innerhalb der Fahrzeugkupplung, insbesondere innerhalb der Schwungscheibe (6) der Fahrzeugkupplung, eine aus ineinandergreifenden Scheibensätzen (32, 52) bestehende und mit viskoser Flüssigkeit gefüllte Flüssigkeitskupplung (30, 50) vorzusehen.

Fig.1

EP 0 108 393 A1

31. Oktober 1983
8011 A

## Fahrzeugkupplung, insbesondere für Kraftfahrzeuge

Die Erfindung bezieht sich auf eine Fahrzeugkupplung, insbesondere für Kraftfahrzeuge mit einer mit der Kurbelwelle des Antriebsmotors verbundenen Schwungscheibe, einer durch eine Tellerfeder betätigbaren Druckplatte und einer mit der Antriebswelle drehfest verbundenen Kupplungsscheibe.

Eine solche in axialer Richtung eine gedrängte Bauart aufweisende Kupplung ist zwischen Motor und Getriebe angeordnet. Der sich an das Getriebe anschließende Antriebsstrang überträgt das vom Motor erzeugte Drehmoment entweder auf die Hinterräder oder, bei Frontantriebsfahrzeugen, auf die Vorderräder. Ungleichförmigkeiten im Motorlauf und Schwingungen derselben übertragen sich auf den Antriebsstrang, was Schwingungsanregungen der Antriebsachsen zur Folge haben kann. Dies führt wiederum zu einem nachteiligen Dröhnen und Brummen sowie zu Vibrationen im Fahrzeug, insbesondere wenn untertourig gefahren wird.

Zur Beseitigung dieses Nachteils ist es bekannt, im Antriebsstrang Schwingungstilger zur Dämpfung der Schwingungen vorzusehen. Diese bestehen aus einer über ein elastisches Material, z. B. Gummi mit einem umlaufenden Teil verbundenen Masse. Diese Schwingungstilger erfordern einen gewissen Platzbedarf und sind meist an der Verbindungsstelle von Getriebeausgangswelle und Gelenkwelle angeordnet.

Es sind auch Flüssigkeitsreibungskupplungen bekannt, die aus ineinandergreifenden Scheibensätzen bestehen, die innerhalb eines abgeschlossenen, mit viskoser Flüssigkeit gefüllten Gehäuses angeordnet sind. Solche Kupplungen dienen nach der DE-PS 21 35 791 ganz allgemein dazu, das Drehmoment zwischen einem antreibenden und einem angetriebenen System zu übertragen und hierbei Vibrationen des antreibenden Systems vom angetriebenen System fernzuhalten. Nach der DE-AS 14 75 395 sollen solche Flüssigkeitsreibungskupplungen auch im Fahrzeugbau zum Einsatz kommen. Es sind solche Kupplungen aber bis jetzt nur für den Antrieb des Lüfterrades bekannt geworden. Dabei handelt es sich um nicht ein- und ausrückbare Kupplungen.

Soweit es sich um ein- und ausrückbare Kupplungen dieser Art wie in der DE-PS 857 720 handelt, so würden diese, soweit man sie anstelle der im Fahrzeugbau üblichen Scheibenreibungskupplungen verwenden würde, natürlich ebenfalls eine Dämpfung der Drehschwingungen bewirken. Dies tun auch die als Anfahrkupplungen bezeichneten hydrodynamischen Kupplungen, die mit einer mechanischen Trennkupplung verbunden sind. Eine solche aus einer Primär- und einer Sekundärschale bestehende hydrodynamische Kupplung benötigt in Verbindung mit der mechanischen Kupplung sehr viel Platz, der aber an sich nicht zur Verfügung steht.

Der Erfindung liegt die Aufgabe zugrunde, eine Dämpfung der Drehschwingungen im Antriebsstrang so vorzunehmen, daß dadurch kein oder nur wenig zusätzlicher Platz beansprucht wird, daß sich dadurch bei der Montage des Antriebsstranges selbst kein Mehraufwand ergibt und daß sie an einer Stelle erfolgt, wo sie die größte Wirkung für den gesamten Antriebsstrang entfaltet.

Die Erfindung erreicht dies mit einer Kupplung der eingangs gekennzeichneten Art dadurch, daß innerhalb derselben eine aus ineinandergreifenden Scheibensätzen bestehende und mit viskoser Flüssigkeit gefüllte Flüssigkeitskupplung angeordnet ist.

Die Erfindung nutzt in sinnvoller Weise die Kupplung dazu aus, darin die Flüssigkeitskupplung unterzubringen, was ohne zusätzlichen Raumbedarf möglich ist. Die Fahrzeugkupplung erfüllt somit zwei Aufgaben, nämlich einmal die des Ein- und Auskuppelns und zum anderen die der Schwingungsdämpfung. Die Schwingungsdämpfung erfolgt dabei nahe am Ort der Entstehung der Schwingungen, ohne daß eine Übersetzung durch das Getriebe zwischen Entstehung und Dämpfung der Schwingungen vorhanden ist. Es ist dabei nur eine Drehrichtung gegeben. Durch den Ort der Dämpfung werden das Leerlaufgetriebeklappern und das Rasseln, die insbesondere bei Fünfganggetrieben auftreten können, günstig beeinflußt bzw. vermieden. Auch erfolgt eine gute Dämpfung des schnellen Einkuppelns und Gasgebens.

In vorteilhafter Weise ist die Flüssigkeitskupplung innerhalb der Schwungscheibe angeordnet, die dazu entsprechend geteilt wird. In diesem Falle wird am wenigsten oder u.U. gar kein zusätzlicher Raum beansprucht.

Die ineinandergreifenden Scheibensätze der Flüssigkeitskupplung können in an sich bekannter Weise entweder in radialer oder in axialer Richtung verlaufen.

Eine zweckmäßige Ausführungsform, die einen einfachen Zusammenbau der Kupplung ergibt, wird dann erreicht, wenn die Schwungscheibe zur Bildung der Füssigkeitskupplung in radialer Richtung geteilt und von einer einteiligen treibenden Kupplungshälfte und von einer getriebenen Kupplungshälfte gebildet ist, die aus zwei miteinander verbundenen Teilen besteht, zwischen denen die Flüssigkeitskupplung angeordnet ist.

Die Schwungscheibe kann zur Bildung der Flüssigkeitskupplung auch in axialer Richtung geteilt sein.

Die Erfindung wird anhand von zwei Ausführungsbeispielen näher erläutert.

- 4 -

In der Zeichnung zeigen:

Fig. 1    einen Schnitt durch eine Kupplungshälfte mit der erfindungsgemäßen Anordnung und

Fig. 2    einen gleichen Schnitt wie Fig. 1 mit
          einer anderen Ausführungsform.

Die Reibungskupplung besteht aus dem Kupplungsgehäuse 2, einer mit der Kurbelwelle 4 eines Antriebsmotors verbundenen Schwungscheibe 6, einer durch eine Tellerfeder 8 betätigbaren Druckplatte 10 und aus einer mit der Antriebswelle 12 drehfest verbundenen Kupplungsscheibe 14. Die Antriebswelle 12 ist einerseits mittels Wälzlager 16 in einer Bohrung 18 der Kurbelwelle 4 und andererseits in einer nicht dargestellten Trennwand des Kupplungsgehäuses gelagert. Die Kippfeder 8 liegt an dem mit der Schwungscheibe 6 verbundenen Lagerdeckel 20 sowie an dem Kippring 22 an. Das Drucklager 24 ist auf der Führungshülse 26 verschiebbar angeordnet.

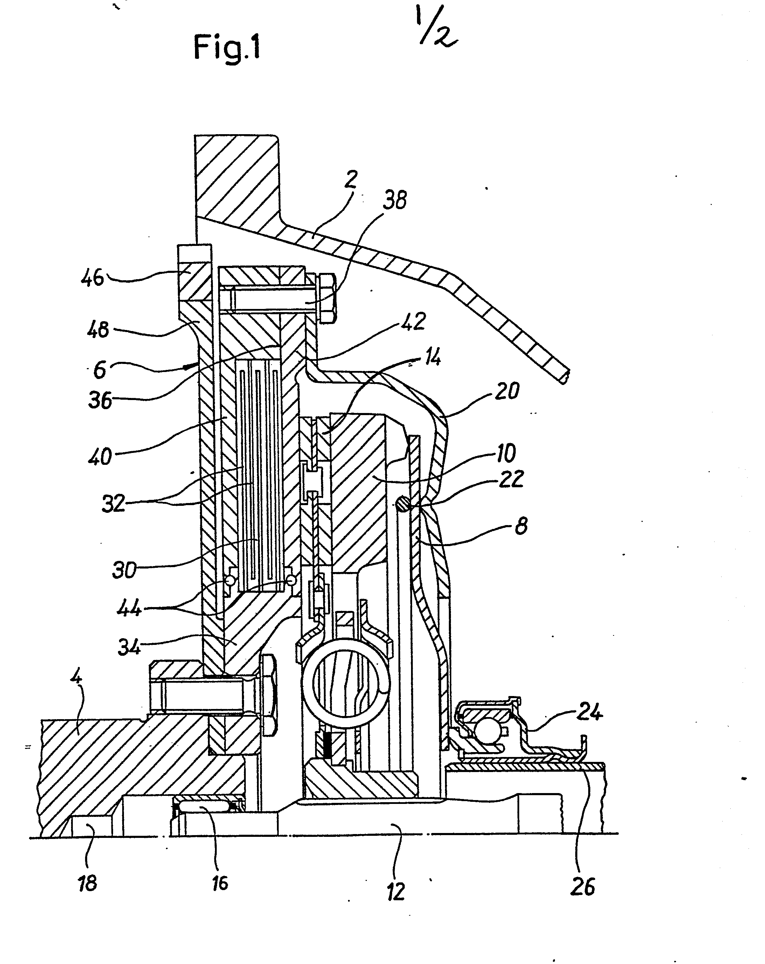

Innerhalb der Kupplungsscheibe 6 ist in Fig. 1 die mit viskoser Flüssigkeit gefüllte Flüssigkeitskupplung 30 angeordnet, deren ineinander greifende Scheibensätze 32 in radialer Richtung verlaufen. Die Schwungscheibe 6 besteht dabei aus einer treibenden Kupplungshälfte 34 und einer getriebenen Kupplungshälfte 36, die aus den beiden mittels Schrauben 38 verbundenen Teilen 40 und 42 besteht, die die Flüssigkeitskupplung 30 einschließen. Zwischen der treibenden Kupplungshälfte 34 und der getriebenen Kupplungshälfte 36 befinden sich an den sich berührenden Flächen Dichtungen 44. Diese Art der Aufteilung der Kupplungsscheibe 6 ergibt ein einfaches Unterbringen der Flüssigkeitskupplung 30 in der Kupplungsscheibe 6.

Der Zahnkranz 46 der Schwungscheibe 6 befindet sich an einem Teil 48, das von der Kupplungshälfte 36 durch einen Spalt getrennt ist.

0108393

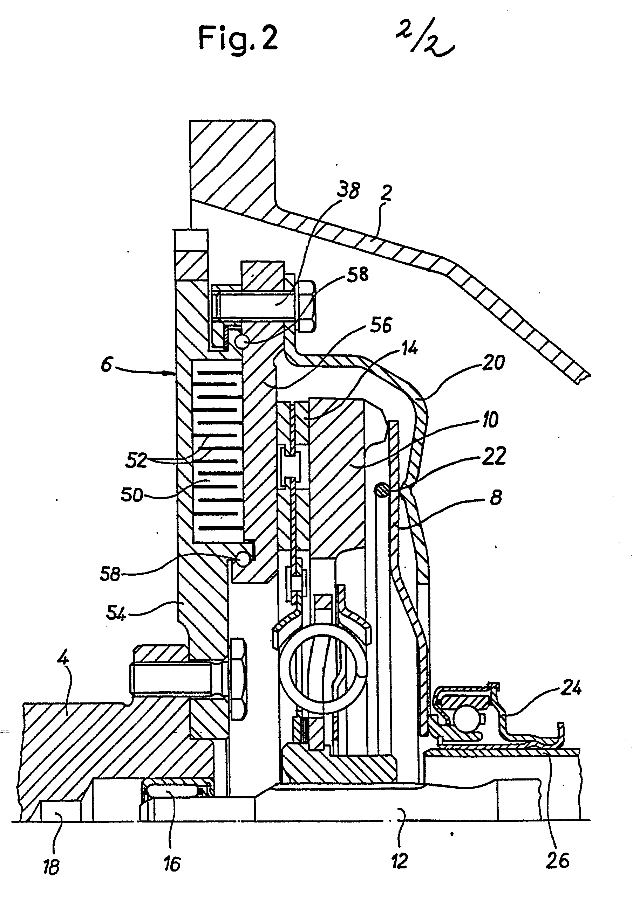

Die Fig. 2 unterscheidet sich von der Fig. 1 durch eine andere Ausbildung der Schwungscheibe 6 und der Flüssigkeitskupplung,
die hier mit 50 bezeichnet ist. Die ineinander greifenden
Scheibensätze 52 verlaufen hier in axialer Richtung. Der eine
Scheibensatz ist mit der treibenden Kupplungshälfte 54 der
Schwungscheibe 6 verbunden, während der andere Scheibensatz mit
der getriebenen Kupplungshälfte 56 in Verbindung steht. Die
Schwungscheibe 6 ist hier zur Bildung der Flüssigkeitskupplung
in axialer Richtung geteilt. Zwischen den Kupplungshälften 54
und 56 sind Dichtungen 58 vorgesehen.

Ansprüche

1. Fahrzeugkupplung, insbesondere für Kraftfahrzeuge mit einer mit der Kurbelwelle des Antriebsmotors verbundenen Schwungscheibe, einer durch eine Tellerfeder betätigbaren Druckplatte und einer mit der Antriebswelle drehfest verbundenen Kupplungsscheibe, dadurch gekennzeichnet, daß innerhalb der Fahrzeugkupplung eine aus ineinandergreifenden Scheibensätzen (32, 52) bestehende und mit viskoser Flüssigkeit gefüllte Flüssigkeitskupplung (30, 50) angeordnet ist.

2. Fahrzeugkupplung nach Anspruch 1, dadurch gekennzeichnet, daß die Flüssigkeitskupplung (30, 50) innerhalb der Schwungscheibe (6) angeordnet ist.

3. Fahrzeugkupplung nach Anspruch 1 und 2, dadurch gekennzeichnet, daß die ineinandergreifenden Scheibensätze (32) der Flüssigkeitskupplung (30) in an sich bekannter Weise in radialer Richtung verlaufen.

4. Fahrzeugkupplung nach Anspruch 1 und 2, dadurch gekennzeichnet, daß die ineinandergreifenden Scheibensätze (52) der Flüssigkeitskupplung (50) in an sich bekannter Weise in axialer Richtung verlaufen.

5. Fahrzeugkupplung nach Anspruch 1 bis 3, dadurch gekennzeichnet, daß die Schwungscheibe (6) zur Bildung der Flüssigkeitskupplung (30) in radialer Richtung geteilt und von einer einteiligen treibenden Kupplungshälfte (34) und von einer getriebenen Kupplungshälfte (36) gebildet ist, die aus zwei miteinander verbundenen Teilen (40, 42) besteht, zwischen denen die Flüssigkeitskupplung (30) angeordnet ist.

0108393

6. Fahrzeugkupplung nach Anspruch 1, 2 und 4,
   dadurch gekennzeichnet, daß die Schwungscheibe (6) zur
   Bildung der Flüssigkeitskupplung (50) in axialer Richtung
   geteilt ist.

Fig.1

1/2    0108393

# Fig.2

Europäisches
Patentamt

**EUROPÄISCHER RECHERCHENBERICHT**

## EINSCHLÄGIGE DOKUMENTE

EP 83110942.6

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US - A - 4 317 510 (STAUB)<br>* Gesamt *<br>-- | | F 16 D 47/06 |
| A | DE - A - 1 450 111 (EATON YALE & TOWNE)<br>* Gesamt *<br>-- | | |
| A | DE - A - 1 450 112 (EATON YALE & TOWNE)<br>* Gesamt *<br>-- | | |
| A,D | DE - B - 1 475 395 (MORSE CHAIN)<br>* Gesamt *<br>-- | | |
| A | DE - A1 - 2 425 797 (DABISCH)<br>* Gesamt *<br>-- | | RECHERCHIERTE SACHGEBIETE (Int. Cl. ³) |
| A | DE - A1 - 2 723 429 (EATON CORP.)<br>* Gesamt *<br>-- | | F 16 D 47/06<br>F 16 D 47/00<br>F 16 D 35/00<br>F 16 D 39/00 |
| A | DE - A1 - 2 745 936 (EATON CORP.)<br>* Gesamt *<br>-- | | |
| A | DE - A1 -2 942 052 (AISIN SEIKI)<br>* Gesamt *<br>---- | | |

Der vorliegende Recherchenbericht wurde für alle Patentansprüche erstellt.

| Recherchenort | Abschlußdatum der Recherche | Prüfer |
|---|---|---|
| WIEN | 27-01-1984 | KAMMERER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82